# EUROPEAN PATENT APPLICATION

(11) **EP 4 796 512 A1**
(43) Date of publication of application: **26.08.2026**
(21) Application number: 24879530.4
(22) Date of filing: 27.09.2024
(51) Int. Cl.: C04B 35/495, H01B 3/12, H01G 4/12, H01G 4/30

(54) **DIELECTRIC COMPOSITION, DIELECTRIC ELEMENT, AND LAMINATED ELECTRONIC COMPONENT**

(30) Priority: 16.10.2023 JP 2023178179
(71) Applicant: Niterra Co., Ltd., Nagoya-shi, Aichi 461-0005 (JP)
(72) Inventor: KIMURA, Koya, Nagoya-shi, Aichi 461-0005 (JP); HIROSE, Yoshinobu, Nagoya-shi, Aichi 461-0005 (JP); KOZUKA, Hisashi, Nagoya-shi, Aichi 461-0005 (JP)
(74) Representative: Grünecker Patent- und Rechtsanwälte PartG mbB
(86) International application number: PCT/JP2024/034630
(87) International publication number: WO 2025/084104

(57) **Abstract**

A dielectric composition 2 of the present invention includes a first phase 21 having a tungsten bronze-type crystal structure containing at least Sr, Na, Nb, Ca, Y, and Zr, and a second phase 22 having a perovskite-type crystal structure containing at least Sr, Na, Ca, Y, and Zr. In an observation region S set on a cut surface of the dielectric composition 2, the second phase 22 accounts for 8.8% to 60% of the area (100%) of the entire observation region S, excluding pores 20.

## Description

### TECHNICAL FIELD

The present invention relates to a dielectric composition, a dielectric element, and a laminated electronic component.

### BACKGROUND ART

A dielectric capacitor (for example, a laminated ceramic capacitor) is a capacitor including a dielectric layer formed of a dielectric composition and is used as a major component in various electronic apparatuses such as home appliances, automobile control equipment, etc. Among such dielectric capacitors, for example, those used in powertrains of electric vehicles are required to have high withstand voltages (so that they do not break down under application of high voltage) and maintain their high relative permittivities in high electric fields, because higher voltages (e.g., 400 V to 800 V) are applied thereto due to the increased voltages of the batteries of the electric vehicles. In addition, dielectric capacitors of such a type are required to have large capacitances (i.e., to increase their capacitances) in addition to high withstand voltages and high relative permittivities in high electric fields.

Notably, as shown in Patent Document 1, in order to enable a dielectric capacitor to have a large capacitance in an environment in which a high voltage is applied, it is required that a change (the amount of decrease) in relative permittivity upon application of a DC volage is small.

Although a dielectric composition containing BaTiO₃ which has high permittivity has been conventionally used for dielectric capacitors, the relative permittivity of the dielectric composition containing BaTiO₃ in a high electric field is significantly low. Therefore, there has been proposed to use, for a dielectric capacitor, for example, a dielectric composition having a tungsten bronze-type structure as shown in Patent Document 1.

### PRIOR ART DOCUMENT

### PATENT DOCUMENT

Patent Document 1: WO2017/163845

### SUMMARY OF THE INVENTION

### PROBLEM TO BE SOLVED BY THE INVENTION

In the case of the conventional dielectric composition having a tungsten bronze-type structure, although the above-described change (the amount of decrease) in the relative permittivity is small, the relative permittivity in a high electric field cannot be said to be sufficiently high, which has been a problem.

An object of the present invention is to provide a dielectric composition, etc. in which the amount of decrease in relative permittivity upon application of a DC high voltage is small and the relative permittivity in a high electric field is high.

### MEANS FOR SOLVING THE PROBLEM

Means for solving the above-described problem are as follows.
<1> A dielectric composition including: a first phase having a tungsten bronze-type crystal structure containing at least Sr, Na, Nb, Ca, Y, and Zr, and a second phase having a perovskite-type crystal structure containing at least Sr, Na, Ca, Y, and Zr,
   wherein, in an observation region set on a cut surface of the dielectric composition, the second phase accounts for 8.8% to 60% of the area (100%) of the entire observation region, excluding pores.
<2> The dielectric composition recited in the above paragraph <1>, wherein the concentration of Na contained in the second phase is 2.1 times to 2.5 times the concentration of Na contained in the first phase, and the concentration of Sr contained in the second phase is 0.59 times to 0.63 times the concentration of Sr contained in the first phase.
<3> The dielectric composition recited in the above paragraph <1> or <2>, wherein the second phase accounts for 8.8% to 32% of the area (100%) of the entire observation region, excluding pores.
<4> A dielectric element comprising:
   a dielectric ceramic formed of the dielectric composition recited in any one of the above paragraphs <1> to <3>; and electrodes attached to the dielectric ceramic.
<5> A laminated electronic component comprising a laminated body in which dielectric layers formed of the dielectric composition recited in any one of the above paragraphs <1> to <3> and internal electrode layers are alternatingly stacked.

### EFFECT OF THE INVENTION

According to the present invention, it is possible to provide a dielectric composition, etc. in which the amount of decrease in relative permittivity upon application of a DC high voltage is small and the relative permittivity in a high electric field is high.

### BRIEF DESCRIPTION OF THE DRAWINGS

[FIG. 1] FIG. 1 is a perspective view of a dielectric element.
[FIG. 2] FIG. 2 is a sectional view of a laminated electronic component.
[FIG. 3] FIG. 3 shows an SEM image of a cut surface of a measurement sample of Example 4.
[FIG. 4] FIG. 4 is an enlarged view of a portion of the SEM image of FIG. 3.
[FIG. 5] FIG. 5 shows a first binarized image corresponding to the SEM image of Example 4.
[FIG. 6] FIG. 6 shows a second binarized image corresponding to the SEM image of Example 4.
[FIG. 7] FIG. 7 shows x-ray diffraction patterns of Example 4 and Example 5.

### MODES FOR CARRYING OUT THE INVENTION

A dielectric composition, a dielectric element, and a laminated electronic component according to an embodiment will now be described.

The dielectric composition includes a first phase having a tungsten bronze-type crystal structure containing at least Sr, Na, Nb, Ca, Y, and Zr, and a second phase having a perovskite-type crystal structure containing at least Sr, Na, Ca, Y, and Zr.

In an observation region set on a cut surface of the dielectric composition, the second phase accounts for 8.8% to 60% (preferably, 8.8% to 32%) of the area (100%) of the entire observation region, excluding pores. Notably, the first phase corresponds to the remaining area of the observation region; i.e., the area remaining after removing the second phase from the entire observation region.

The tungsten bronze-type crystal structure in the first phase is composed of a tungsten bronze-type complex oxide containing at least Sr, Na, Nb, Ca, Y, and Zr. The tungsten bronze-type complex oxide is expressed by the following composition formula (1).

SrₐCa_{b}Y_{c}NaₓNb_{5-d}Zr_{d}O₁₅ ..... (1)

As the values of coefficients x, a, b, c, and d in the above-described composition formula (1), values which are preferred from the viewpoint of electrical characteristics of the dielectric composition are appropriately chosen from values which allow establishment of the tungsten bronze-type crystal structure.

Specifically, coefficient a with respect to Sr satisfies 1.34 ≤ a ≤ 1.75, coefficient b with respect to Ca satisfies 0.05 ≤ b ≤ 0.11, coefficient c with respect to Y satisfies 0.09 ≤ c ≤ 0.14, coefficient x with respect to Na satisfies 0.82 ≤ x ≤ 1.04, coefficient d with respect to Zr satisfies 0.02 ≤ d ≤ 0.08, and coefficient 5-d with respect to Nb satisfies 4.82 ≤ 5-d ≤ 4.98.

The perovskite-type crystal structure in the second phase is composed of a perovskite-type complex oxide containing at least Sr, Na, Ca, Y, and Zr. The perovskite-type complex oxide is expressed by the following composition formula (2).

(SrₑCa_{f}Y_{g}Naₕ) (NbᵢZrⱼ)O₃ ····· (2)

As the values of coefficients e, f, g, h, i, and j in the above-described composition formula (2), values which are preferred from the viewpoint of electrical characteristics of the dielectric composition are appropriately chosen from values which allow establishment of the perovskite-type crystal structure.

Specifically, coefficient e with respect to Sr satisfies 0.186 ≤ e ≤ 0.242, coefficient f with respect to Ca satisfies 0.010 ≤ f ≤ 0.020, coefficient g with respect to Y satisfies 0.007 ≤ g ≤ 0.009, and coefficient h with respect to Na satisfies 0.431 ≤ h ≤ 0.505.

In addition, coefficient i with respect to Nb satisfies 0.911 ≤ i ≤ 0.998, and coefficient j with respect to Zr satisfies 0.009 ≤ j ≤ 0.089.

In the dielectric composition, the concentration of Na contained in the second phase is preferably 2.1 times to 2.5 times the concentration of Na contained in the first phase.

In addition, in the dielectric composition, the concentration of Sr contained in the second phase is preferably 0.59 times to 0.63 times the concentration of Sr contained in the first phase.

Notably, the dielectric composition may contain crystal phases other than the first phase and the second phase, as long as the object of the present invention is not impaired.

In addition, the dielectric composition may contain, as unavoidable impurities, elements other than those contained in the first phase and the second phase at a proportion of 1000 ppm or less.

Examples of raw materials used for production of the dielectric composition include a Sr-containing compound which contains strontium, a Na-containing compound which contains sodium, a Nb-containing compound which contains niobium, a Ca-containing compound which contains calcium, an Y-containing compound which contains yttrium, and a Zr-containing compound which contains zirconium.

Examples of the Sr-containing compound include powders of various inorganic compounds such as oxides of Sr, complex oxides of Sr, hydroxide of Sr, carbonate of Sr, chloride of Sr, sulphate of Sr, nitrate of Sr, and phosphate of Sr. A specific example is powder of strontium carbonate.

Examples of the Na-containing compound include powders of various inorganic compounds such as oxides of Na, complex oxides of Na, hydroxide of Na, carbonate of Na, chloride of Na, sulphate of Na, nitrate of Na, and phosphate of Na. A specific example is powder of sodium carbonate.

Examples of the Nb-containing compound include powders of various inorganic compounds such as oxides of Nb, complex oxides of Nb, hydroxide of Nb, carbonate of Nb, chloride of Nb, sulphate of Nb, nitrate of Nb, and phosphate of Nb. A specific example is powder of niobium oxide.

Examples of the Ca-containing compound include powders of various inorganic compounds such as oxides of Ca, complex oxides of Ca, hydroxide of Ca, carbonate of Ca, chloride of Ca, sulphate of Ca, nitrate of Ca, and phosphate of Ca. A specific example is powder of calcium carbonate.

Examples of the Y-containing compound include powders of various inorganic compounds such as oxides of Y, complex oxides of Y, hydroxide of Y, carbonate of Y, chloride of Y, sulphate of Y, nitrate of Y, and phosphate of Y. A specific example is powder of yttrium oxide.

Examples of the Zr-containing compound include powders of various inorganic compounds such as oxides of Zr, complex oxides of Zr, hydroxide of Zr, carbonate of Zr, chloride of Zr, sulphate of Zr, nitrate of Zr, and phosphate of Zr. A specific example is powder of zirconium oxide.

Notably, a method for producing the dielectric composition will be described when necessary in the description of a method for producing a dielectric element and a method for producing a laminated electronic component, which will be described later.

In the case where, in an observation region set on a cut surface of the dielectric composition, the second phase accounts for 8.8% to 60% of the area (100%) of the entire observation region, excluding pores, the relative permittivity in a high electric field (8 kV/mm) is 900 or more, the ratio of decrease (the ratio of change) in the relative permittivity upon application of a DC high voltage is more than -41%, and the relative permittivity decrease amount is reduced.

No particular limitation is imposed on the relative permittivity of the dielectric composition in a state in which no electric field is applied (0 kV/mm), as long as the object of the present invention is not impaired, but is preferably 1,300 or more, more preferably 1,400 or more, further preferably 1,500 or more.

In particular, in the case where, in an observation region set on a cut surface of the dielectric composition, the second phase accounts for 8.8% to 32% of the area (100%) of the entire observation region, excluding pores, the relative permittivity in a high electric field (8 kV/mm) is 1,000 or more, the ratio of decrease (the ratio of change) in the relative permittivity upon application of a DC high voltage is -35% or more, and the relative permittivity decrease amount is further reduced.

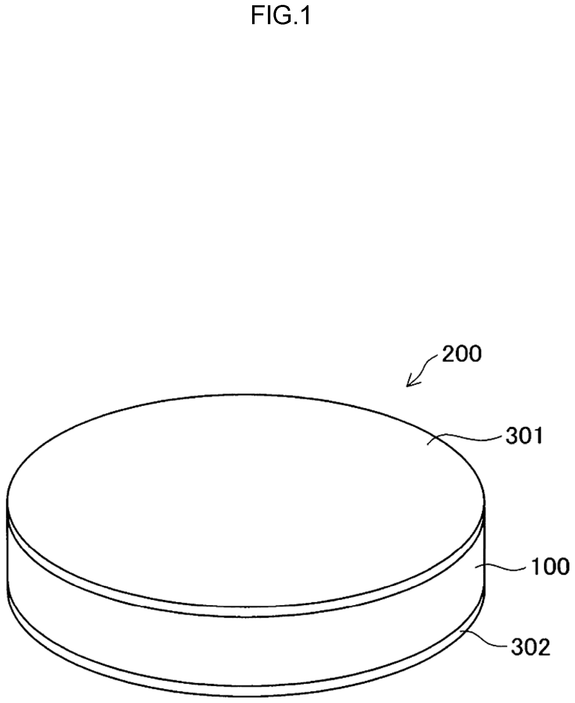

Next, a dielectric element 200 which includes a dielectric ceramic 100 formed of a dielectric composition will be described with reference to FIG. 1. FIG. 1 is a perspective view of the dielectric element 200. As shown in FIG. 1, the dielectric element 200 has a disc-like appearance and includes a disc-shaped dielectric ceramic (dielectric layer) 100 and electrodes 301 and 302 attached to the upper and lower surfaces of the dielectric ceramic 100. The dielectric ceramic 100 is formed of the above-described dielectric composition. The electrodes 301 and 302 are formed of, for example, Au.

Here, one example of the method for producing the dielectric element 200 will be described. First, as material powders, there are prepared powder of strontium carbonate, powder of sodium carbonate, powder of niobium oxide, powder of calcium carbonate, powder of yttrium oxide, and powder of zirconium oxide. These powders are weighed to obtain a target composition.

The weighed material powders with ethanol added thereto are wet-mixed in a ball mill for 15 hours or more to obtain a slurry. The obtained slurry is appropriately dried, whereby mixed powder is obtained. The obtained mixed powder is calcined at a temperature of 1,100°C to 1,300°C in an air atmosphere for 5 to 7 hours, whereby calcined powder is obtained.

The calcined powder thus obtained is mixed with a dispersant, a binder, and ethanol, and then pulverized to obtain a slurry. The slurry is dried and granulated to obtain granulates. A disc-shaped preliminary compact is obtained by compressing the obtained granulates at a pressure of 20 MPa by uniaxial pressing. Subsequently, a CIP process (cold isostatic pressing process) is performed on the disc-shaped preliminary compact at a pressure of 150 MPa, whereby a compact is obtained.

The obtained compact is held at 650°C for 4 hours so as to perform a debindering process. The compact having undergone the debindering process is fired in an air atmosphere; specifically, the compact is held at a temperature of 1,300°C to 1,350°C in an air atmosphere for 4 hours, whereby a dielectric ceramic (dielectric layer) formed of the dielectric composition is obtained. The opposite main faces (upper and lower surfaces) of the obtained dielectric ceramic are polished, and Au external electrodes are formed on the opposite main faces by sputtering, whereby the dielectric element 200 is obtained.

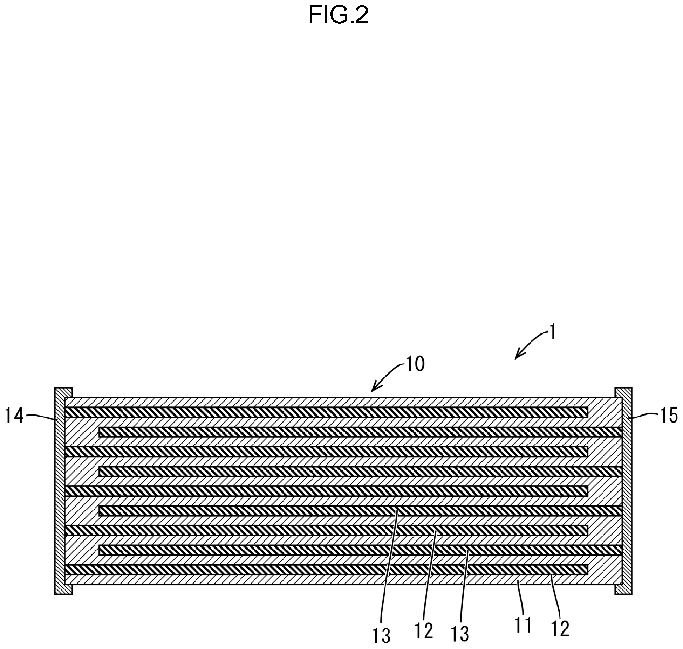

Next, a laminated electronic component 1 including dielectric layers 11 formed of a dielectric composition will be described with reference to FIG. 2. FIG. 2 is a sectional view of the laminated electronic component 1. The laminated electronic component 1 is a so-called laminated ceramic capacitor. As shown in FIG. 2, the laminated electronic component 1 includes a laminated body 10 which includes a plurality of dielectric layers 11 formed of a dielectric composition, and first internal electrode layers (one example of internal electrode layers) 12 and second internal electrode layers (one example of internal electrode layers) 13 alternatingly stacked with the dielectric layers 11 intervening therebetween. The laminated electronic component 1 further includes a first external electrode 14 and a second external electrode 15 which are electrically connected to the first internal electrode layers 12 and the second internal electrode layers 13, respectively, and are formed on the outer surface of the laminated body 10. The first external electrode 14 is connected to the first internal electrode layers 12 on one side surface of the laminated electronic component 1, and the second external electrode 15 is connected to the second internal electrode layers 13 on the other side surface of the laminated electronic component 1.

Examples of the material of the first internal electrode layers 12 and the second internal electrode layers 13 include, for example, Cu, Ag, and Ni. Examples of the material of the first external electrode 14 and the second external electrode 15 include, for example, Au.

Here, one example of the method for producing the laminated electronic component 1 will be described. First, as material powders, there are prepared powder of strontium carbonate, powder of sodium carbonate, powder of niobium oxide, powder of calcium carbonate, powder of yttrium oxide, and powder of zirconium oxide. These powders are weighed to obtain a target composition.

The weighed material powders with ethanol added thereto are wet-mixed in a ball mill for 15 hours or more to obtain a slurry. The obtained slurry is appropriately dried, whereby mixed powder is obtained. The obtained mixed powder is calcined at a temperature of 1,100°C to 1,300°C in an air atmosphere for 5 to 7 hours, whereby calcined powder is obtained.

The calcined powder thus obtained is mixed with a dispersant, a binder, and ethanol, and then pulverized to obtain a slurry. A plurality of ceramic green sheets are produced from this slurry by the doctor blade method.

Subsequently, by using electrically conductive paste for internal electrodes, electrode layers which become the internal electrode layers (the first internal electrode layers and the second internal electrode layers) are formed on one side of the ceramic green sheet through, for example, screen printing. The electrode layers contain a base metal as a main component; for example, contains nickel (Ni) as a main component.

Subsequently, the plurality of ceramic green sheets with the electrode layers formed thereon are stacked in such a manner that the electrode layers are alternatingly exposed from the opposite side surfaces, and ceramic green sheets with no electrode layer are stacked on the front and back surfaces of the obtained laminated body. The obtained laminated body is compressed, whereby a laminated body in which the ceramic green sheets and the electrode layers are alternatingly stacked is obtained. This laminated body is cut into a desired shape and is held at a temperature of, for example, 200°C to 400°C for 2 to 10 hours so as to perform a debindering process.

The laminated body having undergone the debindering process is fired in an air atmosphere; specifically, the laminated body is held at a temperature of 1,300°C to 1,350°C in an air atmosphere for 4 hours. As a result of firing, the ceramic green sheets become the dielectric layers 11, and the electrode layers become the internal electrode layers (the first internal electrode layers and the second internal electrode layers).

After appropriately polishing the side surfaces of the fired laminated body 10 (by barrel polishing, sand blast, etc.), a pair of Au external electrodes (the first external electrode 14 and the second external electrode 15) are formed on the side surfaces of the laminated body 10 by, for example, sputtering. In this manner, the laminated electronic component 1 is obtained.

In the case of the dielectric composition disclosed in the present specification, the amount of decrease in relative permittivity upon application of a DC high voltage is small, and the relative permittivity in a high electric field is high. In addition, the dielectric composition has a high withstanding voltage.

The dielectric element and the laminated electronic component each of which includes a dielectric layer formed of the above-described dielectric composition is used, for example, in the powertrain of an electric vehicle in which a high voltage (for example, 400 V to 800 V) is applied. Examples of the laminated electronic component include dielectric capacitors, laminated ceramic capacitors, etc. In addition, the above-described dielectric composition may be used in various electronic apparatuses such as home appliances, automobile control equipment, etc.

### EXAMPLES

The present invention will now be described in more detail on the basis of examples. Notably, the present invention is not limited in any way by these examples.

### [Examples 1 to 6, Comparative Examples 1 to 4]

First, as material powders, there were prepared powder of strontium carbonate, powder of calcium carbonate, powder of sodium carbonate, powder of potassium carbonate, powder of niobium oxide, powder of yttrium oxide, and powder of zirconium oxide. From these powders, powders necessary for producing each sample were selected and weighed to obtain a target composition shown in Table 1. The weighed material powders with ethanol added thereto were wet-mixed in a ball mill for 15 hours or more to obtain a slurry. The obtained slurry was appropriately dried, whereby mixed powder was obtained. The obtained mixed powder was calcined at a temperature of 1,200°C in an air atmosphere for 6 hours, whereby calcined powder was obtained.

The calcined powder thus obtained was mixed with a dispersant, a binder, and ethanol, and then pulverized to obtain a slurry. The slurry was dried and granulated to obtain granulates. A disc-shaped preliminary compact was obtained by compressing the obtained granulates at a pressure of 20 MPa by uniaxial pressing. Subsequently, a CIP process (cold isostatic pressing process) was performed on the disc-shaped preliminary compact at a pressure of 150 MPa, whereby a compact was obtained.

The obtained compact was held at 650°C for 4 hours so as to perform a debindering process. The compact having undergone the debindering process was fired in an air atmosphere; specifically, the compact was held at a temperature of 1,300°C to 1,350°C in an air atmosphere for 4 hours, whereby a dielectric ceramic formed of the dielectric composition was obtained. The opposite main faces (upper and lower surfaces) of the obtained dielectric ceramic were polished, whereby a measurement sample having mirror-like opposite main faces was obtained.

Subsequently, for evaluation of electrical characteristics, Au external electrodes were formed on the opposite main faces of the dielectric ceramic by sputtering, whereby a dielectric element (a measurement sample for evaluation of electrical characteristics) was obtained.

### [Evaluation]

Experiments which will be described below were performed on samples of Examples 1 to 6 and Comparative Examples 1 to 4.

### (Relative permittivity)

The relative permittivities (at 0 kV/mm, 8 kV/mm) of each measurement sample for evaluating electrical characteristics were respectively calculated from the value of capacitance at 1 kHz measured at room temperature by an impedance analyzer in a state in which no DC voltage was applied to the measurement sample (namely, 0 kV/mm) and the value of capacitance at 1 kHz measured at room temperature by the impedance analyzer in a state in which a DC voltage of 8 kV/mm was applied to the measurement sample. The results are shown in Table 3.

### (Decrease ratio of relative permittivity)

The ratio of decrease (ratio of change) [%] from the relative permittivity at the time when the application voltage was 0 kV/mm to the relative permittivity at the time when the application voltage was 8 kV/mm was obtained by the formula {[(relative permittivity at 8 kV/mm) - (relative permittivity at 0 kV/mm)]/(relative permittivity at 0 kV/mm)}×100. The results are shown in Table 3.

### (Ratio of second phase)

Separately from the measurement sample for evaluation of electrical characteristics, a measurement sample having no external electrode was prepared and was cut in its thickness direction. The obtained cut surface was polished. The polished cut surface of the measurement sample was photographed using a scanning electron microscope (SEM) at a magnification of 500x, whereby an SEM image of the cut surface was obtained. Image analysis was performed on the obtained SEM image by using an image processing software program (Image-J) so as to determine the ratio of the secondary phase in the entirety of an observation region S (a rectangular area of 1,280 pixels (in the vertical direction) x 960 pixels (in the horizontal direction)) (pores are excluded) set on the cut surface. Specifically, the ratio of the secondary phase was calculated by the following steps.

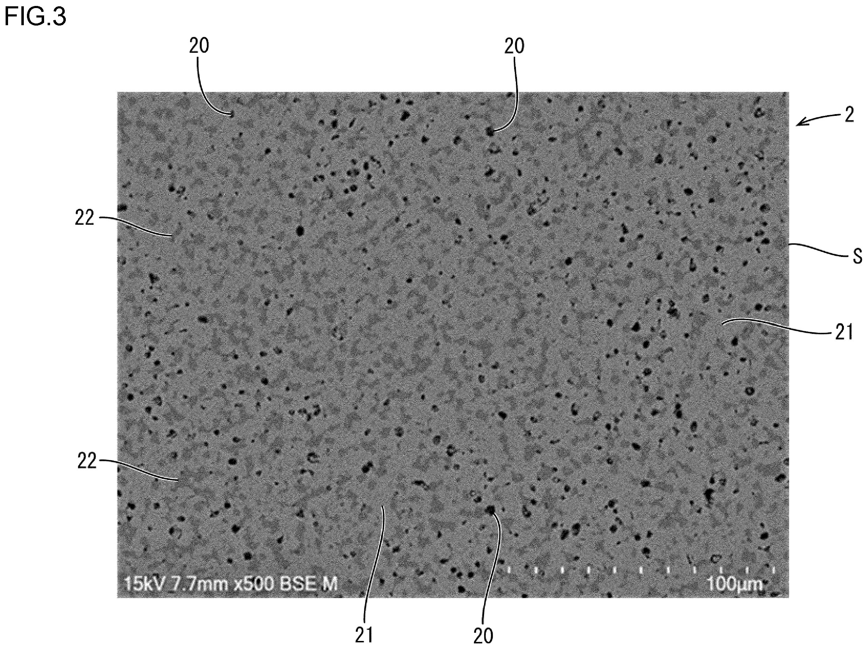

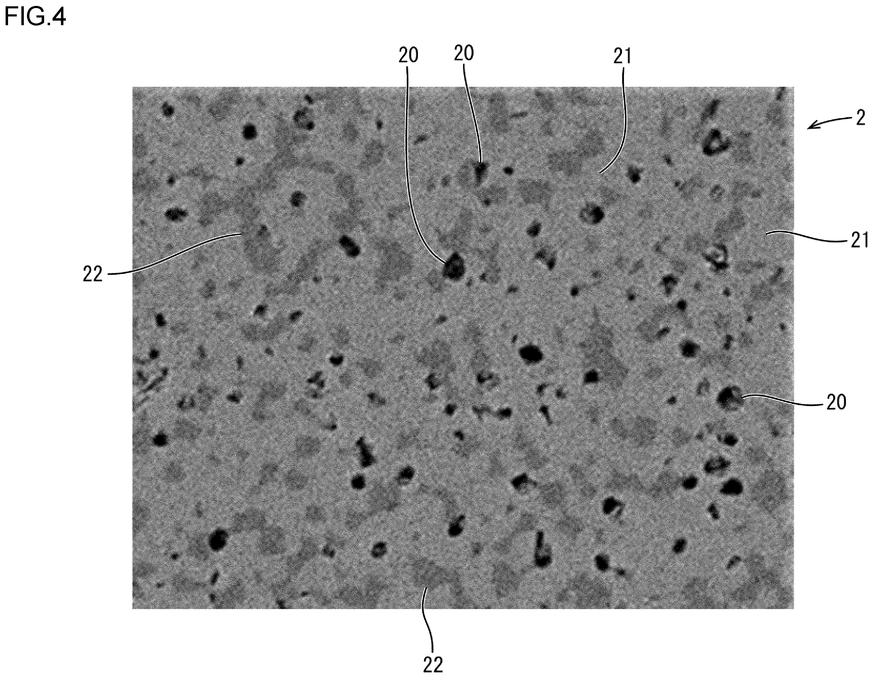

FIGS. 3 and 4 show examples of SEM images. FIG. 3 shows an SEM image of a cut surface of the measurement sample (dielectric composition 2) of Example 4, and FIG. 4 shows, on an enlarged scale, a portion of the SEM image of FIG. 3. In FIGS. 3 and 4, spot-like portions shown in black correspond to pores (voids) 20 formed in the dielectric composition 2. In FIGS. 3 and 4, portions which are the most pale correspond to the first phase 21 in the dielectric composition. In FIGS. 3 and 4, portions which are thicker in color than the first phase 21 and thinner in color than the pores 20 (namely, gray portions) correspond to the second phase 22 in the dielectric composition. In this manner, in the SEM image of the measurement sample, the first phase, the second phase, and the pores can be distinguished from one another on the basis of differences in color (concentrations of pixel colors, etc.).

In view of the above, a binarization process for detecting the second phase and pores (hereinafter referred to as a "first binarization process") and a binarization process for detecting only pores (hereinafter referred to as a "second binarization process") were performed for the SEM image by appropriately setting threshold values.

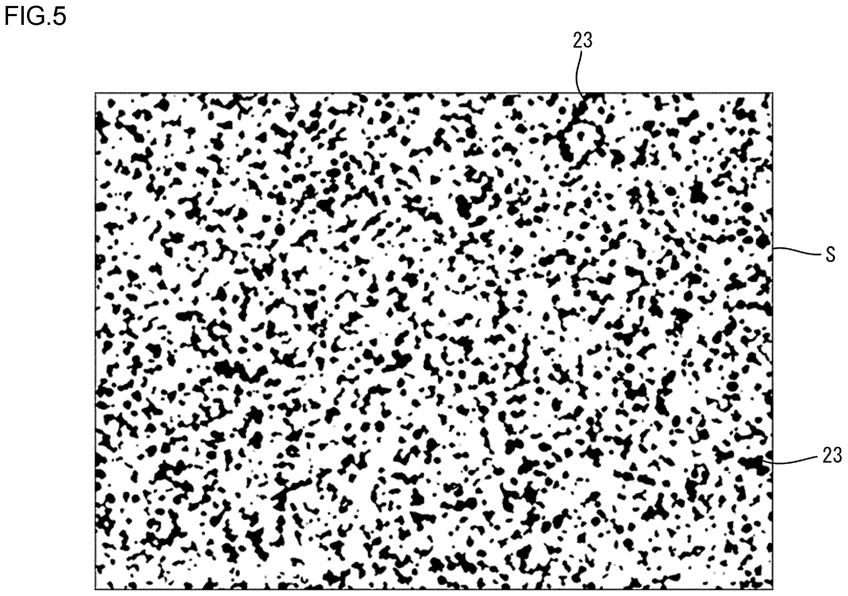

Subsequently, on the basis of a first binarized image obtained by the first binarization process, the ratio (hereinafter referred to as the "ratio A1") of the total area of the second phase and pores to the area of the entire observation region of the SEM image was calculated by the Li method. For reference, the first binarized image corresponding to the SEM image of Example 4 is shown in FIG. 5. In FIG. 5, spot-like black portions 23 correspond to the second phase and/or pores.

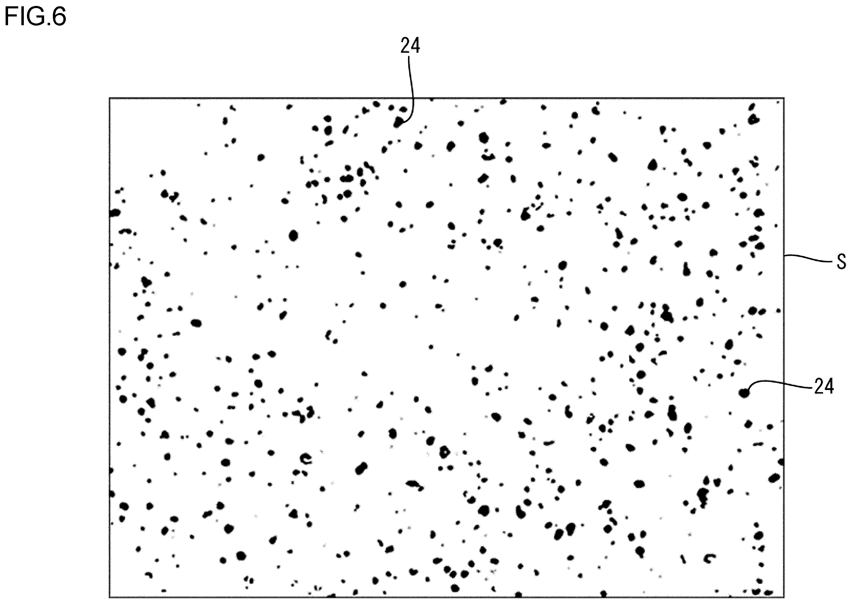

Also, on the basis of a second binarized image obtained by the second binarization process, the ratio (hereinafter referred to as the "ratio A2") of the area of pores to the area of the entire observation region of the SEM image was calculated by the IsoDATA method. For reference, the second binarized image corresponding to the SEM image of Example 4 is shown in FIG. 6. In FIG. 6, spot-like black portions 24 correspond to the pores.

Subsequently, on the basis of the obtained ratios A1 and A2, the ratio of the area of the second phase to the area of the entire observation region of the cut surface, excluding pores, was obtained by a calculation expression [((ratio A1) - (ratio A2))/(1 - (ratio A2))×100]. The results are shown in Table 3.

### (Elemental analysis)

On the above-described cut surface of the measurement sample, the elements in the first phase and the second phase were analyzed by using an electron probe micro analyzer (EPMA). The results are shown in Table 1. Notably, the measurement conditions were an acceleration voltage of 15 kV and an irradiation current of 25 nA. Table 1 shows the concentration (mol%) of each element relative to 100 mol% of all elements.

For reference, Table 2 shows a composition formula representing the tungsten bronze-type crystal structure of the first phase in each example or comparative example and a composition formula representing the perovskite-type crystal structure of the second phase in each example or comparative example, the composition formulas being obtained from the results of the elemental analysis (element ratios) shown in Table 1. Notably, the composition formula of the tungsten bronze-type crystal structure was determined such that the sum (Nb + Zr) of the concentration of Nb and the concentration of Zr shown in Table 1 became 5 (the coefficient with respect to Nb and Zr in the composition formula). Similarly, the composition formula of the perovskite-type crystal structure was determined such that the sum (Nb + Zr) of the concentration of Nb and the concentration of Zr shown in Table 1 became 1 (the coefficient with respect to Nb and Zr in the composition formula).

### (Sr concentration ratio)

The ratio (Sr concentration ratio) of the concentration of Sr contained in the second phase of the measurement sample to the concentration of Sr contained in the first phase of the measurement sample was obtained on the basis of the results of the above-described measurement by EPMA (see Table 1). The results are shown in Table 3.

### (Na concentration ratio)

The ratio (Na concentration ratio) of the concentration of Na contained in the second phase of the measurement sample to the concentration of Na contained in the first phase of the measurement sample was obtained on the basis of the results of the above-described measurement by EPMA (see Table 1). The results are shown in Table 3.

### (XRD)

Structure analysis was performed for the polished surface of the measurement sample by XRD (X-ray diffractometry). A micro X-ray diffractometer was used as a measurement device for XRD, and analysis was performed by using Cu Kα rays in a range of 2θ = 20° to 90°.

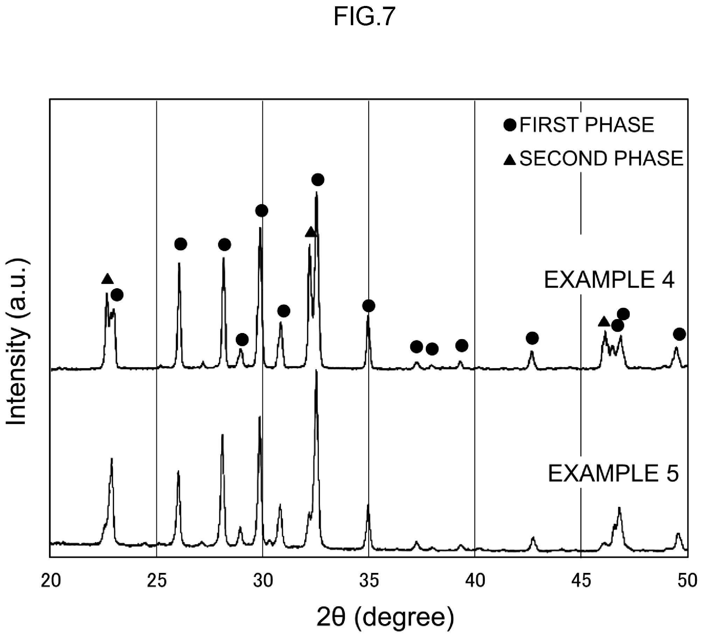

For reference, x-ray diffraction patterns of Example 4 and Example 5 are shown in FIG. 7. Of the graphs shown on the upper and lower sides of FIG. 7, the upper-side graph shows the x-ray diffraction pattern of the measurement sample of Example 4, and the lower-side graph shows the x-ray diffraction pattern of the measurement sample of Example 5. The horizontal axis of FIG. 7 represents diffraction angle (°), and the vertical axis of FIG. 7 represents intensity (arbitrary unit).

**[Table 1]**

| | FIRST PHASE | | | | | | | SECOND PHASE | | | | | |
|---|---|---|---|---|---|---|---|---|---|---|---|---|---|
| | SrₐCa_{b}Y_{c}NaₓK_{y}Nb_{5-d}Zr_{d}O₁₅ | | | | | | | (SrₑCa_{f}Y_{g}Naₕ)(NbᵢZrⱼ)O₃ | | | | | |
| | Sr | Ca | Y | Na | K | Nb | Zr | Sr | Ca | Y | Na | Nb | Zr |
| | a | b | c | x | y | 5-d | d | e | f | g | h | i | j |
| EXAMPLE 1 | 1.34 | 0.05 | 0.13 | 1.04 | 0 | 4.98 | 0.02 | 0.186 | 0.010 | 0.008 | 0.505 | 0.991 | 0.009 |
| EXAMPLE 2 | 1.40 | 0.05 | 0.11 | 1.00 | 0 | 4.98 | 0.02 | 0.200 | 0.010 | 0.008 | 0.498 | 0.998 | 0.012 |
| EXAMPLE 3 | 1.69 | 0.06 | 0.09 | 0.88 | 0 | 4.82 | 0.02 | 0.229 | 0.011 | 0.007 | 0.476 | 0.986 | 0.014 |
| EXAMPLE 4 | 1.74 | 0.05 | 0.09 | 0.83 | 0 | 4.82 | 0.03 | 0.242 | 0.011 | 0.007 | 0.464 | 0.984 | 0.016 |
| EXAMPLE 5 | 1.75 | 0.05 | 0.09 | 0.82 | 0 | 4.83 | 0.03 | 0.240 | 0.011 | 0.009 | 0.473 | 0.982 | 0.018 |
| EXAMPLE 6 | 1.43 | 0.11 | 0.14 | 0.90 | 0 | 4.92 | 0.08 | 0.195 | 0.020 | 0.007 | 0.431 | 0.911 | 0.089 |
| COMPARATIVE EXAMPLE 1 | 1.77 | 0.06 | 0.04 | 0.68 | 0 | 4.96 | 0.05 | NO SECOND PHASE | | | | | |
| COMPARATIVE EXAMPLE 2 | 1.66 | 0.06 | 0.04 | 0.24 | 0.57 | 4.94 | 0.05 | | | | | | |
| COMPARATIVE EXAMPLE 3 | 1.65 | 0.06 | 0.04 | 0.47 | 0.38 | 4.93 | 0.04 | | | | | | |
| COMPARATIVE EXAMPLE 4 | 1.66 | 0.05 | 0.04 | 0.64 | 0.19 | 4.94 | 0.04 | | | | | | |

**[Table 2]**

| | FIRST PHASE | | | | | | | SECOND PHASE | | | | | |
|---|---|---|---|---|---|---|---|---|---|---|---|---|---|
| | Sr | Ca | Y | Na | K | Nb | Zr | Sr | Ca | Y | Na | Nb | Zr |
| EXAMPLE 1 | 17.8 | 0.63 | 1.71 | 13.8 | 0.0 | 65.9 | 0.23 | 10.9 | 0.6 | 0.4 | 29.5 | 58.0 | 0.5 |
| EXAMPLE 2 | 18.5 | 0.67 | 1.51 | 13.2 | 0.0 | 65.8 | 0.30 | 11.6 | 0.6 | 0.5 | 29.0 | 57.6 | 0.7 |
| EXAMPLE 3 | 22.4 | 0.73 | 1.17 | 11.7 | 0.0 | 63.8 | 0.31 | 13.3 | 0.6 | 0.4 | 27.6 | 57.2 | 0.8 |
| EXAMPLE 4 | 23.1 | 0.73 | 1.15 | 10.9 | 0.0 | 63.8 | 0.41 | 14.0 | 0.7 | 0.4 | 26.9 | 57.0 | 1.0 |
| EXAMPLE 5 | 23.1 | 0.71 | 1.14 | 10.8 | 0.0 | 63.8 | 0.41 | 13.8 | 0.6 | 0.5 | 27.3 | 56.7 | 1.0 |
| EXAMPLE 6 | 18.9 | 1.41 | 1.79 | 11.9 | 0.0 | 65.1 | 1.01 | 11.8 | 1.2 | 0.5 | 26.1 | 55.1 | 5.4 |
| COMPARATIVE EXAMPLE 1 | 23.4 | 0.77 | 0.57 | 9.0 | 0.0 | 65.6 | 0.66 | NO SECOND PHASE | | | | | |
| COMPARATIVE EXAMPLE 2 | 21.9 | 0.83 | 0.57 | 3.2 | 7.6 | 65.3 | 0.60 | | | | | | |
| COMPARATIVE EXAMPLE 3 | 21.8 | 0.73 | 0.59 | 6.2 | 5.0 | 65.2 | 0.59 | | | | | | |
| COMPARATIVE EXAMPLE 4 | 21.9 | 0.70 | 0.56 | 8.4 | 2.6 | 65.3 | 0.51 | | | | | | |

**[Table 3]**

| | Sr CONCENTRATION RATIO (SECOND PHASE / FIRST PHASE) | | Na CONCENTRATION RATIO (SECOND PHASE / FIRST PHASE) | | SECOND PHASE RATIO [%] | | RELATIVE PERMITTIVITY ( 0 kV / mm ) | | RELATIVE PERMITTIVITY ( 8 kV / mm ) | DECREASE RATIO [%] | |
|---|---|---|---|---|---|---|---|---|---|---|---|
| EXAMPLE 1 | | 0.61 | | 2.1 | | 60 | | 1510 | 972 | | -35.6 |
| EXAMPLE 2 | | 0.63 | | 2.2 | | 50 | | 1603 | 988 | | -38.4 |
| EXAMPLE 3 | | 0.59 | | 2.4 | | 32 | | 1503 | 1051 | | -30.1 |
| EXAMPLE 4 | | 0.61 | | 2.4 | | 20 | | 1634 | 1166 | | -28.6 |
| EXAMPLE 5 | | 0.60 | | 2.5 | | 9.7 | | 1926 | 1263 | | -34.4 |
| EXAMPLE 6 | | 0.63 | | 2.2 | | 8.8 | | 1309 | 1192 | | -8.9 |
| COMPARATIVE EXAMPLE 1 | | 0 | | 0 | | 0 | | 1385 | 818 | | -41 |
| COMPARATIVE EXAMPLE 2 | | 0 | | 0 | | 0 | | 2095 | 1037 | | -50.5 |
| COMPARATIVE EXAMPLE 3 | | 0 | | 0 | | 0 | | 2372 | 1165 | | -50.9 |
| COMPARATIVE EXAMPLE 4 | | 0 | | 0 | | 0 | | 2352 | 1141 | | -51.5 |

In the case of the dielectric compositions of Examples 1 to 6, it was confirmed from the results of XRD and EPMA that the first phase has a tungsten bronze-type crystal structure containing Sr, Na, Nb, Ca, Y, and Zr, and the second phase has a perovskite-type crystal structure containing Sr, Na, Ca, Y, and Zr.

In contrast, in the case of the dielectric composition of Comparative Example 1, it was confirmed from the results of XRD and EPMA that the dielectric composition was composed of only the first phase having a tungsten bronze-type crystal structure containing Sr, Na, Nb, Ca, Y, and Zr (a tungsten bronze-type complex oxide).

In addition, in the case of the dielectric compositions of Comparative Examples 2 to 4, it was confirmed from the results of XRD and EPMA that each of the dielectric compositions was composed of only the first phase having a tungsten bronze-type crystal structure containing Sr, Na, Nb, K, Ca, Y, and Zr.

Notably, in the case of the dielectric compositions of Examples 1 to 6, in the observation region S set on the cut surface, the second phase accounted for 8.8% to 60% of the area (100%) of the entire observation region S excluding pores (see Table 3). In contrast, in the case of the dielectric compositions of Comparative Examples 1 to 4, since the dielectric compositions did not contain the second phase, their Sr concentration ratios were 0 (see Table 3).

In the case of such dielectric compositions of Examples 1 to 6, the relative permittivity in a high electric field (8 kV/mm) was 900 or more, and the ratio of decrease (ratio of change) in the relative permittivity upon application of a DC high voltage was more than -41%, whereby the amount of decrease in the relative permittivity was reduced.

In the case of the dielectric composition of Comparative Example 1, the relative permittivity in a high electric field (8 kV/mm) was small. In addition, in the dielectric composition of Comparative Example 1, the amount of decrease in the relative permittivity was greater as compared with those in Examples 1 to 6.

In the case of the dielectric compositions of Comparative Example 2 to 4, although the relative permittivity in a high electric field (8 kV/mm) was large, the amount of decrease in the relative permittivity was greater as compared with those in Examples 1 to 6.

Notably, in the case of the dielectric compositions of Examples 1 to 6, the concentration of Na contained in the second phase was 2.1 times to 2.5 times the concentration of Na contained in the first phase, and the concentration of Sr contained in the second phase was 0.59 times to 0.63 times the concentration of Sr contained in the first phase.

In particular, in the case of the dielectric compositions of Examples 3 to 6, in the observation region S set on the cut surface, the second phase accounted for 8.8% to 32% of the area (100%) of the entire observation region S excluding pores (see Table 3). In the case of such dielectric compositions of Examples 3 to 6, the relative permittivity in a high electric field (8 kV/mm) was 1,000 or more, and the ratio of decrease (ratio of change) in the relative permittivity upon application of a DC high voltage was -35% or more, whereby the amount of decrease in the relative permittivity was further reduced.

### DESCRIPTION OF REFERENCE NUMERALS

100: dielectric ceramic (dielectric layer), 200: dielectric element, 301, 302: electrode, 1: laminated electronic component, 10: laminated body, 11: dielectric layer, 12: first internal electrode layer (internal electrode layer), 13: second internal electrode layer (internal electrode layer), 14: first external electrode, 15: second external electrode, 2: dielectric composition, 20: pore, 21: first phase, 22: second phase

## Claims

1. A dielectric composition including:
a first phase having a tungsten bronze-type crystal structure containing at least Sr, Na, Nb, Ca, Y, and Zr, and
a second phase having a perovskite-type crystal structure containing at least Sr, Na, Ca, Y, and Zr,
wherein, in an observation region set on a cut surface of the dielectric composition, the second phase accounts for 8.8% to 60% of the area (100%) of the entire observation region, excluding pores.

2. The dielectric composition according to claim 1,
wherein the concentration of Na contained in the second phase is 2.1 times to 2.5 times the concentration of Na contained in the first phase, and
the concentration of Sr contained in the second phase is 0.59 times to 0.63 times the concentration of Sr contained in the first phase.

3. The dielectric composition according to claim 1 or 2, wherein the second phase accounts for 8.8% to 32% of the area (100%) of the entire observation region, excluding pores.

4. A dielectric element comprising:
a dielectric ceramic formed of the dielectric composition recited in claim 1 or 2; and
electrodes attached to the dielectric ceramic.

5. A laminated electronic component comprising a laminated body in which dielectric layers formed of the dielectric composition recited in claim 1 or 2 and internal electrode layers are alternatingly stacked.
